# EUROPEAN PATENT APPLICATION

(11) **EP 4 227 866 A1**
(43) Date of publication of application: **16.08.2023**
(21) Application number: 21877514.6
(22) Date of filing: 01.10.2021
(51) Int. Cl.: G06N 20/00

(54) **DATA PROCESSING SYSTEM, MODEL GENERATION DEVICE, DATA PROCESSING METHOD, MODEL GENERATION METHOD, AND PROGRAM**

(30) Priority: 09.10.2020 JP 2020171188
(71) Applicant: Envision AESC Japan Ltd., Zama-shi, Kanagawa 252-0012 (JP)
(72) Inventor: CHEN Jiuting, Zama-shi, Kanagawa 252-0012 (JP); SHIMAWAKI Hidenori, Zama-shi, Kanagawa 252-0012 (JP); HAYASHI Itsuro, Zama-shi, Kanagawa 252-0012 (JP)
(74) Representative: Hamer, Christopher K.
(86) International application number: PCT/JP2021/036407
(87) International publication number: WO 2022/075215

(57) **Abstract**

A data processing system (20) includes an input data processing unit (230), an intermediate data generation unit (240), and an output data generation unit (250). The input data processing unit (230) acquires input data, and converts the input data according to a conversion rule. One example of the conversion rule is to increase the number of values included in the input data by adding dummy data to the input data. The intermediate data generation unit (240) generates intermediate data by processing the input data after the conversion. The intermediate data are, for example, a plurality of rows and/or a plurality of columns of data formed of a plurality of values. The intermediate data include a significant value (i.e., a value desired to be acquired) and a value being a dummy. The output data generation unit (250) generates output data by selecting the significant value of the intermediate data generated by the intermediate data generation unit (240).

## Description

### TECHNICAL FIELD

The present invention relates to a data processing system, a model generation device, a data processing method, a model generation method, and a program.

### BACKGROUND ART

In recent years, a model generated by machine learning is used for various uses. For example, PTL 1 describes that learning using a neural network is used when a state of a secondary battery is estimated.

### RELATED DOCUMENT

### PATENT DOCUMENT

Patent Document 1: Japanese Patent Application Publication No. 2008-232758

### SUMMARY OF THE INVENTION

### TECHNICAL PROBLEM

Value of a model used for an analysis of data, for example, a model generated by machine learning is high. Meanwhile, when a use of the model is widened, a case where a third person can be connected to the model increases as in a case where a device using the model is connected to a network. In this case, input data can be transmitted to the model, and output data by the model can be received. Then, the third person can acquire a plurality of combinations of the output data of the input data, and thus a structure of the model may be able to be estimated.

One example of an object of the present invention is to increase concealment of a model used for an analysis of data.

### SOLUTION TO PROBLEM

The present invention provides a data processing system including:
an input data processing unit that acquires input data formed of a plurality of values, and converts the input data according to a conversion rule;
an intermediate data generation unit that outputs, by processing the input data after conversion, intermediate data formed of a plurality of rows and/or a plurality of columns of data formed of a plurality of values; and
an output data generation unit that generates output data by selecting at least one value located in a predetermined position after a predetermined arithmetic operation is performed on the intermediate data, wherein
the intermediate data generation unit and the output data generation unit are provided in different devices.

The present invention provides a model generation device that generates a model used by an intermediate data generation unit included in the data processing system according to claim 1, and the model generation device includes:
a training data acquisition unit that acquires first training data formed of normal data, and second training data partially including abnormal data; and
a model generation unit that repeats, for a plurality of times, a step of training the model by using the first training data, and then training by using the second training data after conversion by the conversion rule.

The present invention provides a data processing method including,
by a computer:
input data processing of acquiring input data formed of a plurality of values, and converting the input data according to a conversion rule;
intermediate data generation processing of outputting, by processing the input data after conversion, intermediate data formed of a plurality of rows and/or a plurality of columns of data formed of a plurality of values; and
output data generation processing of generating output data by selecting at least one value located in a predetermined position after a predetermined arithmetic operation is performed on the intermediate data, wherein
the intermediate data generation processing and the output data generation processing are performed by different computers.

The present invention provides a model generation method for generating a model used by an intermediate data generation unit included in the data processing system described above, and the model generation method causes a computer to perform:
training data acquisition processing of acquiring first training data formed of normal data, and second training data partially including abnormal data; and
model generation processing of repeating, for a plurality of times, a step of training the model by using the first training data, and then training by using the second training data after conversion by the conversion rule.

The present invention provides a program causing a computer to include:
an input data processing function of acquiring input data formed of a plurality of values, and converting the input data according to a conversion rule; and
an intermediate data generation function of outputting, by processing the input data after conversion, intermediate data formed of a plurality of rows and/or a plurality of columns of data formed of a plurality of values.

The present invention provides a program causing a computer to include
an output data generation function of generating output data by selecting at least one value located in a predetermined position after a predetermined arithmetic operation is performed on the intermediate data generated by the intermediate data generation function described above.

The present invention provides a program causing a computer to include a function of generating a model used by an intermediate data generation unit included in the data processing system according to claim 1, and the program causes the computer to include:
a training data acquisition function of acquiring first training data formed of normal data, and second training data partially including abnormal data; and
a model generation function of repeating, for a plurality of times, a step of training the model by using the first training data, and then training by using the second training data after conversion by the conversion rule.

### ADVANTAGEOUS EFFECTS OF INVENTION

According to the present invention, concealment of a model used for an analysis of data is increased.

### BRIEF DESCRIPTION OF THE DRAWINGS

[Fig. 1] Fig. 1 is a diagram illustrating one example of a usage environment of a model generation device and a data processing system according to an embodiment.
[Fig. 2] Fig. 2 is a diagram illustrating one example of a functional configuration of the model generation device.
[Fig. 3] Fig. 3 is a diagram illustrating one example of a functional configuration of the data processing system.
[Fig. 4] Fig. 4 is a diagram illustrating a first example of a conversion rule used by a pre-processing unit of the model generation device and an input data processing unit of the data processing system.
[Fig. 5] Fig. 5 is a diagram illustrating a second example of a conversion rule used by the input data processing unit of the data processing system.
[Fig. 6] Fig. 6 is a diagram illustrating a third example of a conversion rule used by the pre-processing unit of the model generation device and the input data processing unit of the data processing system.
[Fig. 7] Fig. 7 is a diagram illustrating a hardware configuration example of the model generation device.
[Fig. 8] Fig. 8 is a flowchart illustrating a first example of generation processing of a model performed by the model generation device.
[Fig. 9] Fig. 9 is a flowchart illustrating a second example of generation processing of a model performed by the model generation device.
[Fig. 10] Fig. 10 is a flowchart illustrating one example of processing performed by the data processing system.
[Fig. 11] Fig. 11 is a diagram illustrating a generation method for a temporary model.

### DESCRIPTION OF EMBODIMENTS

An embodiment of the present invention will be described below by using drawings. Note that, in all of the drawings, a similar component has a similar reference sign, and description thereof will not be repeated as appropriate.

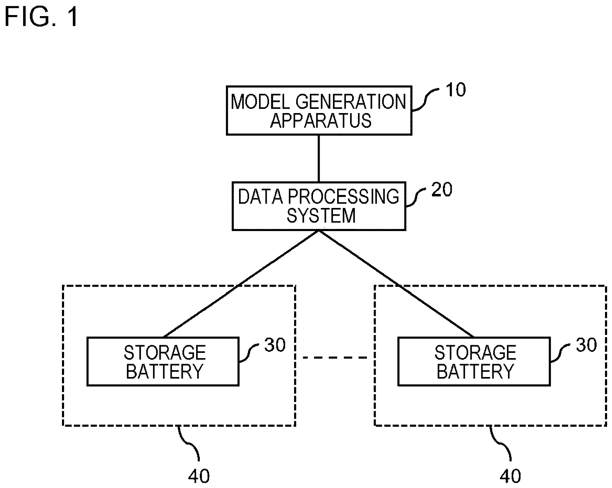

Fig. 1 is a diagram illustrating one example of a usage environment of a model generation device 10 and a data processing system 20 according to an embodiment. The data processing system 20 processes input data by using a model generated by the model generation device 10, and outputs output data. The input data are formed of a plurality of values. One example of the plurality of values is a result of measuring a state of a target object by indexes different from each other. In the following description, the target object is a storage battery (secondary battery) 30, and the input data are a measurement result of a state of the storage battery 30. In this case, the input data include, for example, an output voltage, an output current value, and a temperature of the storage battery 30. However, the target object and the input data are not limited to these.

In the example illustrated in Fig. 1, the model generation device 10 and the data processing system 20 are used together with the storage battery 30. A part of a function of the data processing system 20 may be a battery management system (BMS) of the storage battery 30. However, an intermediate data generation unit 240 and an output data generation unit 250 described below are provided in devices different from each other. Then, one data processing system 20 is connected to a plurality of the storage batteries 30, and performs processing related to the plurality of storage batteries 30.

The storage battery 30 supplies power to an apparatus 40. As one example, the apparatus 40 is, for example, a vehicle such as an electric vehicle. However, when the storage battery 30 is a storage battery for home use, the apparatus 40 is an electric apparatus used at home. In this case, the storage battery 30 is located outside the apparatus 40. Further, the storage battery 30 may be connected to a system power network. In this case, the storage battery 30 is used for leveling supplied power. Specifically, the equipment 40 stores electric power when the electric power is remaining, and supplies electric power when the electric power is unexpected.

The data processing system 20 estimates a state of the storage battery 30. The state estimated herein is, for example, at least one of a residual capacity (unit is Ah), a state of charge (SOC), and a state of health (SOH) of the storage battery 30. The SOH is, for example, "current full charge capacity (Ah)/initial full charge capacity (Ah) x 100(%)". Note that the state of the storage battery 30 is not limited to these. In the estimation, as described above, the data processing system 20 uses the model. The model generation device 10 generates and updates at least one of the models used by the data processing system 20 by using machine learning, for example, a neural network.

The model generation device 10 may acquire a measurement value of data (hereinafter described as performance data) related to a state of the storage battery 30 from the plurality of storage batteries 30. In this case, a part of a plurality of pieces of the performance data may be used as training data of machine learning, and at least a part of the rest of the performance data may be used for verifying a model.

The performance data preferably include information that determines a kind (for example, a product name and a model number) of the storage battery 30. In this way, the model generation device 10 can generate a model by a kind of the storage battery 30. Then, the data processing system 20 can acquire, from the model generation device 10, a model associated with the kind of the storage battery 30 connected to the data processing system 20, and use the acquired model. Therefore, estimation accuracy of a state of the storage battery 30 by the data processing system 20 increases.

Note that at least a part of the performance data may be generated by the storage battery 30 used for collecting the performance data as a main purpose.

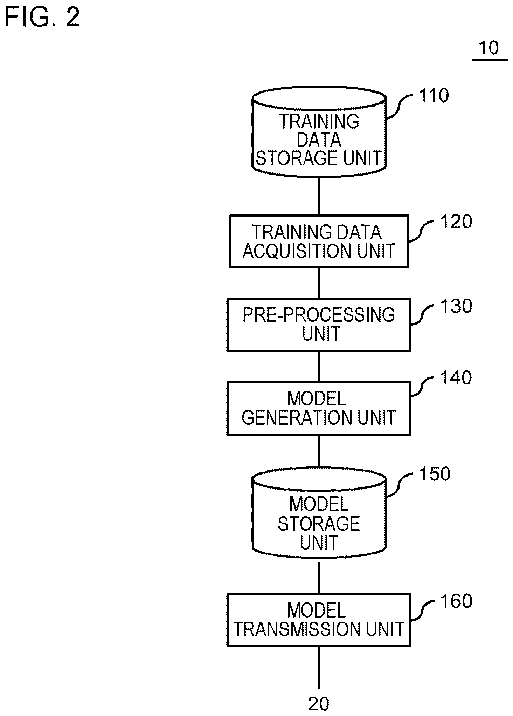

Fig. 2 is a diagram illustrating one example of a functional configuration of the model generation device 10. In the example illustrated in Fig. 2, the model generation device 10 includes a training data acquisition unit 120 and a model generation unit 140. The training data acquisition unit 120 acquires a plurality of pieces of training data. As one example, each piece of the training data sets, as input data, training measurement data including an index (for example, a current, a voltage, and a temperature) indicating a state in a certain charge and discharge cycle of a storage battery, and sets, as a target value, training output data being a value (for example, at least one of a residual capacity, an SOC, and an SOH) indicating performance of the storage battery. The model generation unit 140 generates a model by performing machine learning on the plurality of pieces of training data.

The model generation unit 140 may generate a plurality of models by using a plurality of machine learning algorithms (for example, a long short-term memory (LSTM), a deep neural network (DNN), linear regression (LR), and the like).

In the example illustrated in Fig. 2, the training data acquisition unit 120 acquires the training data from a training data storage unit 110. The training data storage unit 110 may be a part of the model generation device 10, or may be provided outside the model generation device 10. The training data stored in the training data storage unit 110 include first training data formed of normal data, and second training data partially including abnormal data. One example of the first training data is the performance data described above. One example of the second training data includes a value that may not be present as the performance data, and is generated by, for example, a person or a computer.

The model generation device 10 further includes a pre-processing unit 130. The pre-processing unit 130 converts at least the second training data according to a predetermined conversion rule. The model generation unit 140 generates a model by using the second training data after the conversion. Herein, the pre-processing unit 130 may further convert the first training data according to a predetermined conversion rule. In this case, the model generation unit 140 generates a model by using the first training data after the conversion.

One example of the conversion rule described above is processing of increasing, by adding dummy data to input data of the training data, the number of values constituting the input data, and also increasing, by also adding dummy data to output data of the training data, the number of values constituting the output data. For example, when input data are formed of three values, the input data after the conversion include the three values originally included in the input data, and dummy data formed of at least one value, and thus the input data are formed of four or more values. Note that a detailed example of the conversion rule will be described below.

The model generated by the model generation unit 140 is stored in a model storage unit 150. Then, the model stored in the model storage unit 150 is transmitted to the data processing system 20 by a model transmission unit 160. In the example illustrated in Fig. 2, the model storage unit 150 and the model transmission unit 160 are a part of the model generation device 10. However, at least one of the model storage unit 150 and the model transmission unit 160 may be a deice outside the model generation device 10.

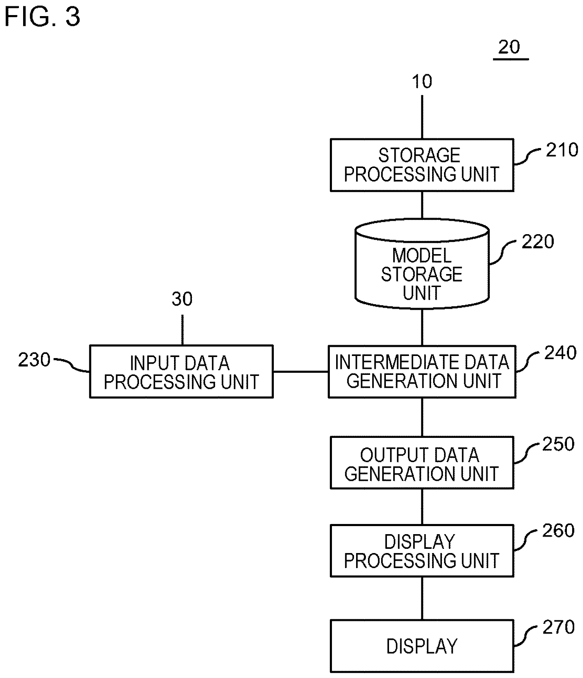

Fig. 3 is a diagram illustrating one example of a functional configuration of the data processing system 20. The data processing system 20 includes an input data processing unit 230, the intermediate data generation unit 240, and the output data generation unit 250.

The intermediate data generation unit 240 and the output data generation unit 250 are devices different from each other. As one example, the output data generation unit 250 of the data processing system 20 is provided on a cloud server, and another function of the data processing system 20 is provided on a terminal. However, a storage processing unit 210, a model storage unit 220, and a display processing unit 260 described below may also be provided on the cloud server.

The input data processing unit 230 acquires input data, and converts the input data according to a conversion rule. A configuration of the input data is the same as that of the input data of the training data used by the model generation device 10. For example, the input data processing unit 230 acquires the input data from a sensor (for example, an ammeter, a voltmeter, and a thermometer) that detects a state of the storage battery 30. Further, the conversion rule used by the input data processing unit 230 is the same as the conversion rule used by the pre-processing unit 130 of the model generation device 10. As described above, one example of the conversion rule is to increase the number of values included in the input data by adding dummy data to the input data.

The intermediate data generation unit 240 generates intermediate data by processing the input data after the conversion. The intermediate data are, for example, a plurality of rows and/or a plurality of columns of data formed of a plurality of values. The intermediate data generation unit 240 generates the intermediate data by using the model generated by the model generation device 10. As described above, when the model generation device 10 generates the model, the model generation device 10 adds the output data of the training data to the dummy data. Thus, the generated intermediate data include a significant value (i.e., a value desired to be acquired) and a value being a dummy.

The output data generation unit 250 generates output data by selecting at least one value (i.e., the significant value of the intermediate data) located in a predetermined position after a predetermined arithmetic operation is performed on the intermediate data generated by the intermediate data generation unit 240. The predetermined arithmetic operation performed herein is, for example, addition, but may be subtraction, multiplication, or division, or may be an arithmetic operation acquired by combining at least two of addition, subtraction, multiplication, and division.

In the example illustrated in Fig. 3, the data processing system 20 further includes the storage processing unit 210, the display processing unit 260, and a display 270.

The storage processing unit 210 acquires the model from the model generation device 10, and stores the model in the model storage unit 220. When the storage processing unit 210 acquires, from the model generation device 10, data (for example, a parameter of the model) for updating the model, the storage processing unit 210 updates the model stored in the model storage unit 220 by using the data. The update processing is preferably repeatedly performed. In the example illustrated in Fig. 3, the model storage unit 220 is a part of the data processing system 20. However, the model storage unit 220 may be a device outside the data processing system 20.

The display processing unit 260 displays the output data generated by the output data generation unit 250 on the display 270. The display 270 is disposed in a position that can be visually recognized by a user of the apparatus 40. For example, when the apparatus 40 is a vehicle, the display 270 is provided inside the vehicle (for example, in front of or obliquely in front of a driver's seat).

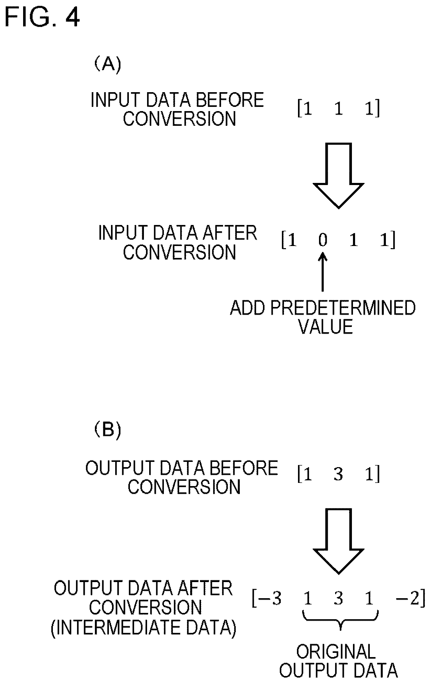

Fig. 4 is a diagram illustrating a first example of a conversion rule used by the pre-processing unit 130 of the model generation device 10 and the input data processing unit 230 of the data processing system 20. Fig. 4(A) illustrates a first example of input data, and Fig. 4(B) illustrates one example of output data associated with Fig. 4(A).

In the example illustrated in Fig. 4(A), the input data are row data, and are formed of a plurality of values (for example, three values of [1, 1, 1]). Then, the conversion rule is to insert dummy data into a predetermined position of the row. As a result, "0" being a value of a dummy is added to a second column in the input data. Then, a value after the second column is moved down by one column.

Then, in the example illustrated in Fig. 4(B), original output data are row data, and are formed of a predetermined number of values (for example, three values of [1, 3, 1]). In contrast, it is assumed that the model generated by the model generation device 10 uses the input data after the conversion, and, as a result, the row data are formed of the number of values (for example, five values of [-3, 1, 3, 1, -2]) greater than the number of the original output data. However, the row data include the original output data ([1, 3, 1]) in a predetermined position (i.e., a predetermined column), and also include a value of a dummy in a remaining position (column). The output data generation unit 250 performs processing of extracting [1, 3, 1] from [-3, 1, 3, 1, -2]. Note that the plurality of values being the original output data do not need to be continuous.

Note that the pre-processing unit 130 of the model generation device 10 adds, in a predetermined position (for example, a second column), dummy data (for example, 0) of a predetermined value to input data (for example, [1, 1, 1]) included in training data. Further, the pre-processing unit 130 adds, in a predetermined position (for example, a first column and a fifth column), predetermined dummy data to output data (for example, [1, 3, 1]) included in the training data. A value of the predetermined dummy data added to the output data herein preferably falls within a range on which a value included in the original output data may take. In this way, a value (i.e., a value that is not selected as the output data) of a dummy included in intermediate data generated by the intermediate data generation unit 240 falls within a range on which the plurality of values being the original output data may take. Therefore, even when a third person views the intermediate data, the third person cannot decide which data of the plurality of values included in the intermediate data are significant data (i.e., the original output data). Thus, the third person cannot determine a combination of the input data and the output data, and, as a result, concealment of a model generated by the model generation device 10 increases.

Note that, in order to set the model in such a manner, in the second training data used by the model generation device 10, a value of a dummy included in output data may fall within a range on which a plurality of values being original output data may take.

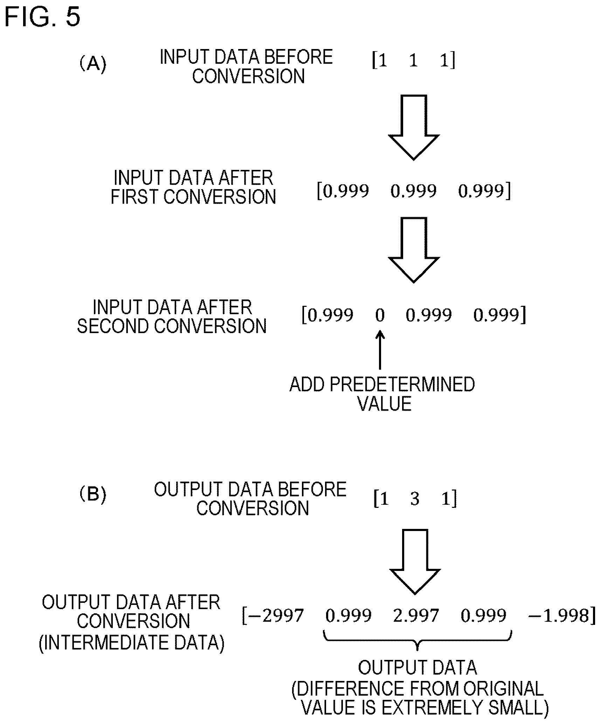

Fig. 5 is a diagram illustrating a second example of a conversion rule used by the input data processing unit 230 of the data processing system 20. Fig. 5(A) illustrates a first example of input data, and Fig. 5(B) illustrates one example of output data associated with Fig. 5(A).

Processing illustrated in Fig. 5 is substantially similar to the processing described by using Fig. 4. However, the conversion rule further includes "when a value that satisfies a predetermined condition is included in input data, the value is replaced with another value". When a third person inputs multiple pieces of input data to the data processing system 20 by using a computer for a purpose of estimating a structure of a model, the input data often include a specific value (for example, an integer such as 0 and 1). Thus, by setting in advance, as the "value that satisfies the predetermined condition" in the conversion rule, a value easily used when the computer automatically generates data, the value is replaced with another value by the conversion rule. Therefore, concealment of the model increases.

Herein, when a difference between the "value that satisfies the predetermined condition" and the "another value" being the value after the replacement is reduced, even in a case where the input data include the "value that satisfies the predetermined condition", a difference between a value of output data output from the output data generation unit 250, and output data (a value of original output data) without the value being replaced is reduced. Thus, an error caused by the replacement of a value of the conversion rule is reduced.

Note that the replacement of a value described above may not be performed in the pre-processing unit 130 of the model generation device 10.

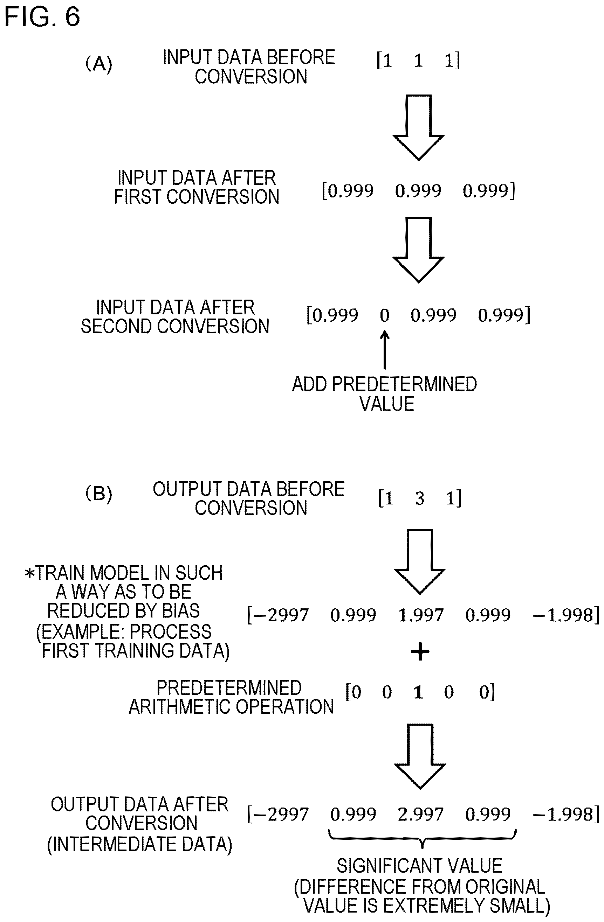

Fig. 6 is a diagram illustrating a third example of a conversion rule used by the pre-processing unit 130 of the model generation device 10 and the input data processing unit 230 of the data processing system 20.

Processing illustrated in Fig. 6 is assumed to be the processing described by using Fig. 4 or 5. Thus, the processing illustrated in Fig. 6(A) is the same as the processing illustrated in Fig. 5(A) (or Fig. 4(A)). Moreover, original data can be acquired by performing a predetermined arithmetic operation on at least one value (a value constituting the original data instead of a value being a dummy) constituting data in intermediate data generated by the intermediate data generation unit 240. The arithmetic operation is performed by the output data generation unit 250. For example, in the example illustrated in Fig. 6(B), the original data can be acquired by adding a constant (for example, 1) to a value in a third column.

In order to do this, for example, in training data used by the model generation unit 140, an inverse arithmetic operation (for example, subtracting a constant (for example, 1) from a value in a third column) of an arithmetic operation performed by the intermediate data generation unit 240 (or the output data generation unit 250) may be performed on output data, and a model used by the intermediate data generation unit 240 may be generated by using the training data after the inverse arithmetic operation is performed.

According to the example illustrated in Fig. 6, a value indicating original data of intermediate data output from a model is a value different from an original value. Thus, concealment of the model further increases.

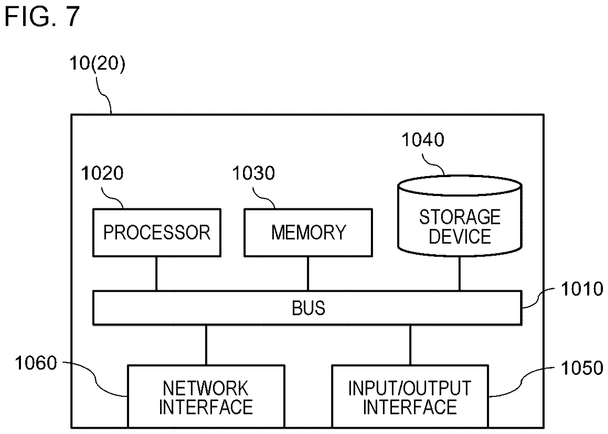

Fig. 7 is a diagram illustrating a hardware configuration example of the model generation device 10. The model generation device 10 includes a bus 1010, a processor 1020, a memory 1030, a storage device 1040, an input/output interface 1050, and a network interface 1060.

The bus 1010 is a data transmission path for allowing the processor 1020, the memory 1030, the storage device 1040, the input/output interface 1050, and the network interface 1060 to transmit and receive data with one another. However, a method for connecting the processor 1020 and the like to one another is not limited to bus connection.

The processor 1020 is a processor achieved by a central processing unit (CPU), a graphics processing unit (GPU), and the like.

The memory 1030 is a main storage device achieved by a random access memory (RAM) and the like.

The storage device 1040 is an auxiliary storage device achieved by a hard disk drive (HDD), a solid state drive (SSD), a memory card, a read only memory (ROM), or the like. The storage device 1040 stores a program module that achieves each function (for example, the training data acquisition unit 120, the pre-processing unit 130, the model generation unit 140, and the model transmission unit 160) of the model generation device 10. The processor 1020 reads each program module onto the memory 1030 and executes the program module, and each function associated with the program module is achieved. Further, the storage device 1040 also functions as the training data storage unit 110 and the model storage unit 150.

The input/output interface 1050 is an interface for connecting the model generation device 10 and various types of input/output equipment.

The network interface 1060 is an interface for connecting the model generation device 10 to a network. The network is, for example, a local area network (LAN) and a wide area network (WAN). A method of connection to the network by the network interface 1060 may be wireless connection or wired connection. The model generation device 10 may communicate with the data processing system 20 via the network interface 1060.

Note that, a hardware configuration of the data processing system 20 is also similar to the example illustrated in Fig. 7. Then, the storage device stores a program module that achieves each function (for example, the storage processing unit 210, the input data processing unit 230, the intermediate data generation unit 240, the output data generation unit 250, and the display processing unit 260) of the data processing system 20. Further, the storage device also functions as the model storage unit 220.

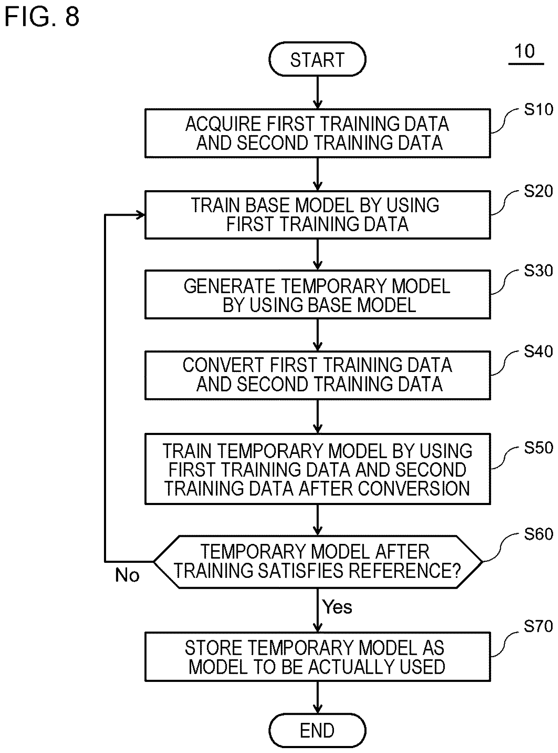

Fig. 8 is a flowchart illustrating a first example of generation processing of a model performed by the model generation device 10.

First, the training data acquisition unit 120 of the model generation device 10 reads training data from the training data storage unit 110 (step S10). The training data include first training data and second training data. In this state, a conversion rule is not applied to the first training data and the second training data, and thus dummy data are not added.

Next, the model generation unit 140 trains a model by using the first training data (step S20). Hereinafter, the model generated by the training is referred to as a base model. The number of values of input data to the base model, and the number of values of output data from the base model are each an original number.

Next, the model generation unit 140 generates a temporary model by processing the base model (step S30). In the temporary model, each of the number of pieces of the input data and the number of pieces of the output data is the number after the conversion rule is applied.

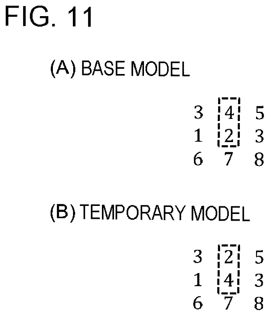

Herein, a generation method for the temporary model will be described. The temporary model is generated by, for example, the following methods. Note that the conversion rule of the first training data and the conversion rule from intermediate data to the output data described above are determined according to the generation method for the temporary model.
(1) In a matrix indicating a parameter of the base model, dummy data are added to a specific column, a specific row, or any position (associated with the examples illustrated in Figs. 4 to 6).
(2) In a matrix indicating a parameter of the base model, a specific column, a specific row, or any component is replaced with one another (see Fig. 11).
(3) (1) and (2) are combined.

Herein, a value of the dummy data in the temporary model is determined by performing training of the temporary model in (1) or (3).

Next, the pre-processing unit 130 converts the first training data and the second training data according to the conversion rule (step S40). Then, the model generation unit 140 trains the temporary model by using the first training data and the second training data after the conversion (step S50). Subsequently, whether the temporary model after the training satisfies a reference is decided (step S60). For example, the reference includes both of the following two references.

A first reference is a fact that a difference between output data as a result of selecting performance data that are not used in the training from the training data storage unit 110, and inputting input data of the selected performance data to the temporary model, and data corresponding to output data of the selected performance data is equal to or less than a reference.

A second reference is a fact that all values constituting output data acquired as a result of inputting, to the temporary model, input data of abnormal data (corresponding to the second training data) that are not used in the training fall within a range of a value on which original output data may take.

When the temporary model after the training does not satisfy the reference (step S60: No), the processing returns to step S20. In other words, the model generation device 10 repeats the processing illustrated in step S20 to step S50 until the temporary model satisfies the reference.

When the temporary model after the training satisfies the reference (step S60: Yes), the model generation unit 140 stores the temporary model as a formal model in the model storage unit 150 (step S70).

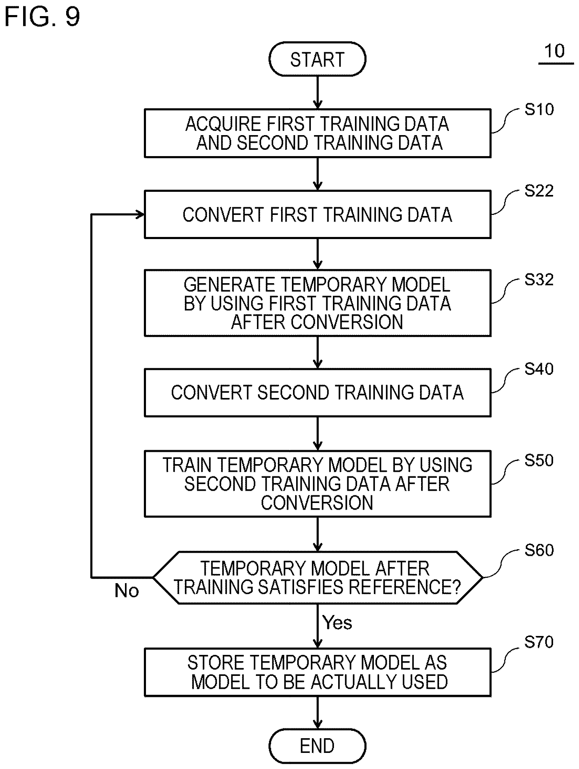

Fig. 9 is a flowchart illustrating a second example of generation processing of a model performed by the model generation device 10. The example illustrated in Fig. 9 is similar to the example illustrated in Fig. 8 except for a point that a temporary model is generated (step S32) by training a model after first training data are converted by a conversion rule (step S22).

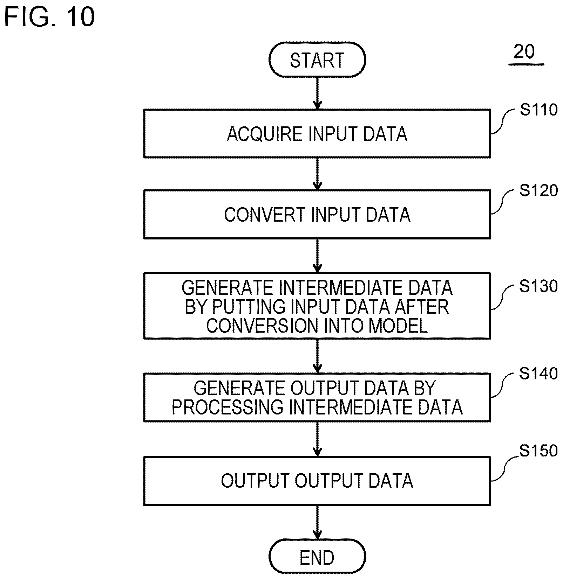

Fig. 10 is a flowchart illustrating one example of processing performed by the data processing system 20. First, the input data processing unit 230 acquires input data. For example, the input data processing unit 230 acquires the input data from the storage battery 30 (step S110), and converts the input data according to a conversion rule (step S120). Next, the intermediate data generation unit 240 acquires intermediate data by inputting the input data after the conversion to a model stored in the model storage unit 220 (step S130). Next, the output data generation unit 250 generates output data by selecting a value located in a predetermined position after a predetermined arithmetic operation is performed on the intermediate data (step S140). Subsequently, the output data generation unit 250 outputs the output data to the display processing unit 260 (step S150). The display processing unit 260 displays the output data on the display 270.

As described above, according to the present embodiment, output data of a model used by the data processing system 20 are different from output data of the data processing system 20. Thus, even when a third person acquires a plurality of combinations of input data and output data of the data processing system 20, a model used by 20 is hardly estimated from the combinations. Therefore, concealment of the model is high.

While the example embodiments of the present invention have been described above with reference to the drawings, the example embodiments are exemplifications of the present invention, and various configurations other than those described above can also be employed.

Further, the plurality of steps (pieces of processing) are described in order in the plurality of flowcharts used in the above-described description, but an execution order of steps performed in each of the example embodiments is not limited to the described order. In each of the example embodiments, an order of the illustrated steps may be changed within an extent that there is no harm in context. Further, each of the example embodiments described above can be combined within an extent that a content is not inconsistent.

This application claims priority based on Japanese Patent Application No. 2020-171188 filed on October 9, 2020, the disclosure of which is incorporated herein in its entirety.

### REFERENCE SIGNS LIST

- 10: Model generation device
- 20: Data processing system
- 30: Storage battery
- 40: Apparatus
- 110: Training data storage unit
- 120: Training data acquisition unit
- 130: Pre-processing unit
- 140: Model generation unit
- 150: Model storage unit
- 160: Model transmission unit
- 210: Storage processing unit
- 220: Model storage unit
- 230: Input data processing unit
- 240: Intermediate data generation unit
- 250: Output data generation unit
- 260: Display processing unit
- 270: Display

## Claims

1. A data processing system comprising:
an input data processing unit that acquires input data formed of a plurality of values, and converts the input data according to a conversion rule;
an intermediate data generation unit that outputs, by processing the input data after conversion, intermediate data formed of a plurality of rows and/or a plurality of columns of data formed of a plurality of values; and
an output data generation unit that generates output data by selecting at least one value located in a predetermined position after a predetermined arithmetic operation is performed on the intermediate data, wherein
the intermediate data generation unit and the output data generation unit are provided in different devices.

2. The data processing system according to claim 1, wherein
a plurality of values included in the input data are a result of measuring a state of a target object by indexes different from each other,
the intermediate data generation unit generates the intermediate data by using a model generated by using training data, and
the conversion rule is to increase a number of values included in the input data by adding dummy data to the input data.

3. The data processing system according to claim 1 or 2, wherein,
when the input data being abnormal are input, a value of a plurality of values included in the intermediate data that is not selected as the output data falls within a range on which a value included in the output data, when the input data being normal are input, may take.

4. The data processing system according to claim 3, wherein
the intermediate data generation unit generates the intermediate data by using a model generated by using training data,
the training data used when the model is generated include first training data formed of normal data, and second training data partially including abnormal data, and
the model is generated by repeating, for a plurality of times, a step of being trained by using the first training data, and then being trained by using the second training data after conversion by the conversion rule.

5. The data processing system according to claim 4, wherein
the first training data are used without being converted by the conversion rule.

6. The data processing system according to any one of claims 2 to 5, wherein
the target object is a secondary battery.

7. The data processing system according to any one of claims 1 to 6, wherein,
when a value that satisfies a predetermined condition is included in the input data, the input data processing unit replaces the value with another value.

8. A model generation device that generates a model used by an intermediate data generation unit included in the data processing system according to any one of claims 1 to 7, the model generation device comprising:
a training data acquisition unit that acquires first training data formed of normal data, and second training data partially including abnormal data; and
a model generation unit that repeats, for a plurality of times, a step of training the model by using the first training data, and then training by using the second training data after conversion by the conversion rule.

9. A data processing method comprising,
by a computer:
input data processing of acquiring input data formed of a plurality of values, and converting the input data according to a conversion rule;
intermediate data generation processing of outputting, by processing the input data after conversion, intermediate data formed of a plurality of rows and/or a plurality of columns of data formed of a plurality of values; and
output data generation processing of generating output data by selecting at least one value located in a predetermined position after a predetermined arithmetic operation is performed on the intermediate data, wherein
the intermediate data generation processing and the output data generation processing are performed by different computers.

10. A model generation method for generating a model used by an intermediate data generation unit included in the data processing system according to any one of claims 1 to 7, the model generation method causing a computer to perform:
training data acquisition processing of acquiring first training data formed of normal data, and second training data partially including abnormal data; and
model generation processing of repeating, for a plurality of times, a step of training the model by using the first training data, and then training by using the second training data after conversion by the conversion rule.

11. A program causing a computer to include:
an input data processing function of acquiring input data formed of a plurality of values, and converting the input data according to a conversion rule; and
an intermediate data generation function of outputting, by processing the input data after conversion, intermediate data formed of a plurality of rows and/or a plurality of columns of data formed of a plurality of values.

12. A program causing a computer to include
an output data generation function of generating output data by selecting at least one value located in a predetermined position after a predetermined arithmetic operation is performed on the intermediate data generated by the intermediate data generation function according to claim 11.

13. A program causing a computer to include a function of generating a model used by an intermediate data generation unit included in the data processing system according to any one of claims 1 to 7, the program causing the computer to include:
a training data acquisition function of acquiring first training data formed of normal data, and second training data partially including abnormal data; and
a model generation function of repeating, for a plurality of times, a step of training the model by using the first training data, and then training by using the second training data after conversion by the conversion rule.
